# EUROPEAN PATENT SPECIFICATION

(11) **EP 2 083 346 B1**
(45) Date of publication and mention of the grant of the patent: **25.08.2010**
(21) Application number: 08150292.4
(22) Date of filing: 15.01.2008
(51) Int. Cl.: G06F 3/023

(54) **Method and apparatus for preventing operation of keystroke learning during entry of selected input strings**
Verfahren und Vorrichtung zur Verhinderung einer Tastenanschlagsspeicherung während der Eingabe ausgewählter Zeichenfolgen
Procédé et appareil pour prévenir l'opération d'apprentissage de frappe lors de l'entrée de chaînes d'entrée sélectionnées

(43) Date of publication of application: 29.07.2009
(73) Proprietor: RESEARCH IN MOTION LIMITED, Waterloo, Ontario N2L 3W8 (CA)
(72) Inventor: Tahir, Tariq, Ontario, N2L 3W8 (CA); Kirkup, Michael G., Ontario, N2L 3W8 (CA); Zubert, Brian, Ontario, N2L 3W8 (CA); Yim, Rebecca, Ontario, N2L 3W8 (CA)
(74) Representative: Fennell, Gareth Charles

(56) References cited:
- EP-A- 1 630 648
- EP-A- 1 693 737
- WO-A-2006/024159

## Description

### Technical Field

This application relates to providing security features for a communication device that includes an input string learning algorithm. In particular, the application discloses methods and apparatus for temporarily disabling an input string learning algorithm when sensitive or secure information is being input to the communication device.

### BACKGROUND AND SUMMARY

Many communication devices, such as, for example, mobile wireless communication devices, include the ability to send and receive text based messages, store reminders and notes, make calendar entries and perform various other functions that involve the input of alphanumeric text strings and the use of text-based functions. Alphanumeric text strings may be input to the communications device in a number of different ways including, for example, using a stylus, a touch screen, a traditional phone keypad that includes shared keys for both alphabetic and numeric characters, a QWERTY-based layout keypad, keypads having combined phone and QWERTY layouts, or the like. Depending upon the size and layout of the input keypad, entry of strings of alphanumeric text data may become difficult and tedious. To this end, many modem small form factor communication devices may optionally include an algorithm that automatically learns user input patterns and may also predictively complete user input strings or provide predictive text options to the user as the user is inputting data to the device. Such algorithms may also, or alternatively, implement disambiguation protocols which, instead of predictively completing input strings, may provide likely outcomes based on the characters or keystrokes as they are entered by the user. The learning feature is desirable because it is convenient and generally saves the user time and keystrokes when used in conjunction with predictive completion or disambiguation protocols.

Regardless of which type of predictive protocol is being implemented, e.g., predictive string completion, disambiguation, or the like, a learning algorithm is typically used to update the contents of the user's dictionary. These learning algorithms may use pre-defined dictionaries of words and alphanumeric strings that provide a basis for predictively completing input strings or implementing disambiguation protocols based on inputs made by the user. For example, such an algorithm may predictively complete alphanumeric entries or provide likely outcomes of what the characters, as they are entered by the user, should represent based on common character letter sequences found in the language being used in addition to strings stored in a dictionary or database of the device. Additionally, these algorithms may provide the ability to effectively learn new words or strings based on the user's inputs to the communications devices based on, for example, frequency of use of a particular string of data. In this manner, over time, the learning algorithm may build or add to a dictionary or database of commonly entered strings which may be used, in turn, to assist the user when entering alphanumeric data by, for example, predictively completing input strings, or alternatively, by providing likely outcomes of what the characters, as they are entered by the user, should or might represent.

In other words, certain devices may provide the capability for "remembering" words, acronyms, or the like that are typed by the user in the creation of, for example, messages, tasks, calendar entries, memopad items, and the like. The capability for "remembering" these words is typically provided automatically, and a user is unable to turn this capability off without dramatically impacting the user experience, especially with smaller form factor devices that may employ, for example, a combined phone and QWERTY keypad layout. Thus, the learning feature may typically be enabled for all input to the communication device by the user, and may store entries based on all alphanumeric strings entered by the user over time.

EP-A-1630648 discloses a handheld electronic device enabled with disambiguation software wherein in certain predefined circumstances, the disambiguation function can be selectively disabled and an alternate keystroke interpretation system provided. WO-2006-024159 discloses a handheld electronic device which provides a visual indication that a particular input routine from among a plurality of input routines is acted on the device. EP-A-1693737 discloses a reduced keyboard handheld electronic device that utilizes a plurality of passwords for controlling access thereto.

The invention is set out in the claims.

### BRIEF DESCRIPTION OF THE DRAWINGS

Exemplary embodiments will be described in detail herein with reference to the following drawings in which like reference numerals refer to like elements, and wherein:

FIG. 1 is an illustrative schematic diagram of an exemplary communication system incorporating a communications device have the capability of user selective disabling of user input string learning according to an exemplary embodiment;

FIG. 2 is an illustrative schematic diagram of an exemplary mobile wireless communications device according to an exemplary embodiment; and

FIG. 3 is an illustrative flow diagram illustrating an operational example of user selective disabling of user input string learning according to an exemplary embodiment.

### DETAILED DESCRIPTION OF EXEMPLARY IMPLEMENTATIONS

To overcome disadvantages attendant with input string learning algorithms, such as those illustratively noted above, a communications device, such as, for example, wireless communications device having an input string or keystroke learning algorithm, is provided with the ability to allow the user to specify that a particular message or entry is secure, and as such, the learning algorithm should not be invoked. This may also be implemented so that disabling of the learning algorithm may occur automatically, such as, for example, when a secure e-mail option is selected for composing a message, or the like. This would prevent the learning algorithm from learning words, phrases, acronyms, or the like used in the message, thereby negating the impact that an unauthorized user might have if he were able to acquire the device and attempt to reconstruct the secure message or its contents. This can occur because the dictionary of alphanumeric strings is typically stored in a memory area of the communication device that is less secure than, for example, an area that may store cryptographic keys, certificates, or the like. If the user's device is lost or stolen, the contents of the dictionary of alphanumeric strings used for predictive completion of input strings or for implementing disambiguation protocols can be easily ascertained. For example, an unauthorized user may be able to re-create the contents of the dictionary by simply inputting string fragments and observing the predictions provided by the device based on the input string fragment. Generally, this type of unauthorized use does not present a high security risk. However, if the dictionary of alphanumeric strings includes sensitive information, such as, for example, passwords, the contents of secure messages, or the like, security of the device, its contents and the ability to send properly certified secure messages may be compromised.

According to an exemplary non-limiting illustrative implementation, the user is provided with the option of disabling the learning algorithm when sensitive information is being input to the device. The device may then automatically resume the learning algorithm. Additionally, the device may optionally provide a notification, such as, for example, an audible tone, vibration, icon indicating on/off status of the learning algorithm, or the like, to indicate that the learning algorithm is disabled, thereby prompting the user to re-activate the learning algorithm upon completion of the entry of the secure information. Any suitable method of enabling the user to disable and re-activate the learning feature, such as, for example, using selected keys, a dedicated key, menu options, or the like, may be used.

According to another alternative illustrative exemplary embodiment, in addition to a user affirmatively disabling the learning algorithm, a program or application, by virtue of what is being entered, may also disable learning capability automatically in a manner transparent to the user. For example, many applications resident on the wireless communications device may be protected by usernames, passwords, or the like. Because the application knows when the user is entering sensitive information, such as, for example, usernames, passwords, or the like (e.g., the device prompts for entry of a password or username, etc.), the application may disable the learning algorithm for entry of the desired input and then automatically re-activate the learning algorithm. Additionally, any number of other actions by the user may invoke automatic disabling of the learning algorithm, such as, for example, selecting a security option during composition of a message, or entering data indicating secure information is being input into a particular field during composition of a message or entry of related items, e.g., tasks, calendar entries, or the like.

Further implementations are also possible, and the examples described herein are provided by way of non-limiting illustration only.

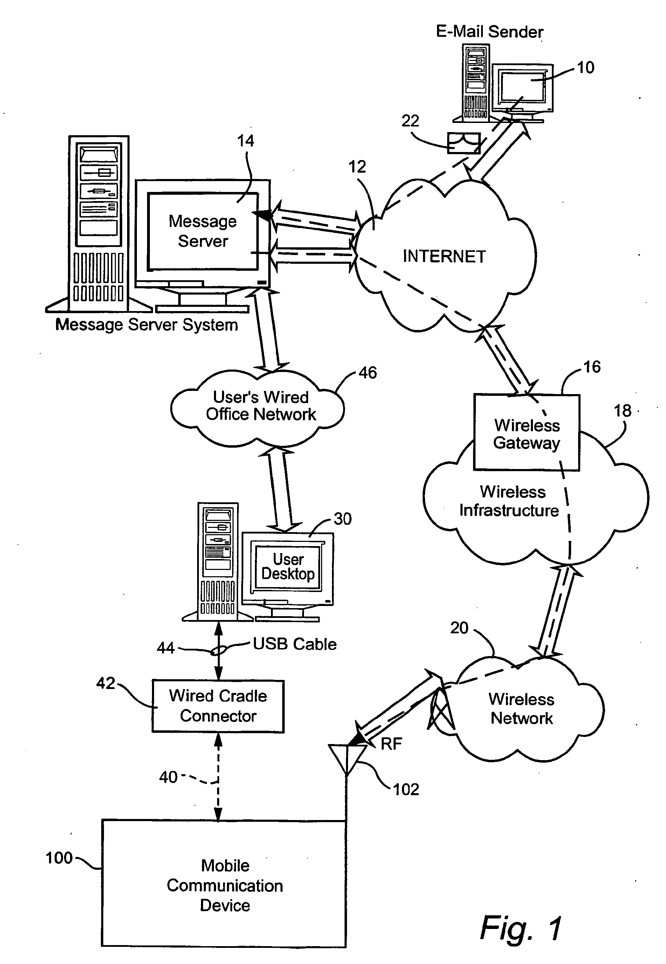

FIG. 1 is an overview of an exemplary communication system in which a wireless communication device 100, such as, for example, a mobile wireless communications device (with an optional wired connection port 40) may be used. One skilled in the art will appreciate that there may be many different system topologies. There may also be many message senders and recipients. The simple exemplary system shown in FIG. 1 is for illustrative purposes only, and shows one exemplary e-mail environment.

FIG. 1 shows an e-mail sender 10, the Internet 12, a message server system 14, a wireless gateway 16, wireless infrastructure 18, a wireless network 20 and a mobile communication device 100.

An e-mail sender 10 may, for example, be connected to an ISP (Internet Service Provider) on which a user of the system has an account, be located within a company, possibly connected to a local area network (LAN), and connected to the Internet 12, or be connected to the Internet 12 through a large ASP (application service provider) such as American Online^{™} (AOL). Those skilled in the art will appreciate that the systems shown in FIG. 1 may instead be connected to a wide area network (WAN) other than the Internet, although e-mail transfers are commonly accomplished through Internet-connected arrangements as shown in FIG. 1.

The message server 14 may be implemented, for example, on a network computer within the firewall of a corporation, a computer within an ISP or ASP system or the like, and acts as the main interface for e-mail exchange over the Internet 12. Although other messaging systems might not require a message server system 14, a mobile device 100 configured for receiving and possibly sending e-mail will normally be associated with an account on a message server. Two such message servers are Microsoft Exchange^{™} and Lotus Domino^{™}. However, any suitable message server may be used. These products are often used in conjunction with Internet mail routers that route and deliver mail. Message servers such as server 14 typically extend beyond just e-mail sending and receiving; they also include dynamic database storage engines that have predefined database formats for data like calendars, to-do lists, task lists, e-mail and documentation.

The wireless gateway 16 and infrastructure 18 provide a link between the Internet 12 and wireless network 20. The wireless infrastructure 18 determines the most likely network for locating a given user and tracks the users as they roam between countries or networks. A message is then delivered to the mobile device 100 via wireless transmission, typically at a radio frequency (RF), from a base station in the wireless network 20 to the mobile device 100. The particular network 20 may be virtually any wireless network over which messages may be exchanged with a mobile communication device.

As shown in FIG. 1, a composed e-mail message 22 is sent by the e-mail sender 10, located somewhere on the Internet 12. This message 22 typically uses traditional Simple Mail Transfer Protocol (SMTP), RFC 822 headers and multipurpose Internet Mail Extension (MIME) body parts to define the format of the mail message. These techniques are all well known to those skilled in the art. The message 22 arrives at the message server 14 and is normally stored in a message store. Most known messaging systems support a so-called "pull" message access scheme, wherein the mobile device 100 must request that stored messages be forwarded by the message server to the mobile device 100. Some systems provide for automatic routing of such messages which are addressed using a specific e-mail address associated with the mobile device 100. In an exemplary illustrative non-limiting implementation, messages addressed to a message server account associated with a host system such as a home computer or office computer 30 which belongs to the user of a mobile device 100 are redirected from the message server 14 to the mobile device 100 as they are received.

Regardless of the specific mechanism controlling forwarding of messages to mobile device 100, the message 22, or possibly a translated or reformatted version thereof, is sent to wireless gateway 16. The wireless infrastructure 18 includes a series of connections to wireless network 20. These connections could be Integrated Services Digital Network (ISDN), Frame Relay or T1 connections using the TCP/IP protocol used throughout the Internet. As used herein, the term "wireless network" is intended to include three different types of networks, those being (1) data-centric wireless networks, (2) voice-centric wireless networks and (3) dual-mode networks that can support both voice and data communications over the same physical base stations. Combined dual-mode networks include, but are not limited to, (1) Code Division Multiple Access (CDMA) networks, (2) the Group Special Mobile or the Global System for Mobile Communications (GSM) and the General Packet Radio Service (GPRS) networks, and (3) third-generation (3G) networks or beyond like Enhanced Data-rates for Global Evolution (EDGE), High-Speed Packet Access (HSPA) and Universal Mobile Telecommunications Systems (UMTS). Some older examples of data-centric network include the Mobitex™ Radio Network and the DataTAC™ Radio Network. Examples of older voice-centric data networks include Personal Communication Systems (PCS) networks like GSM, and TDMA systems.

The wireless RF communication port connection is made via antenna 102 as depicted in FIG. 1. However, the mobile wireless/wired communication device 100 also has a wired connection port 40 which mates with a connection in a wired cradle 42 to establish a wired digital communication link via a USB cable 44 to USB port of the user desktop computer 30. As will be appreciated, the user's computer 30 is also connected to the user's wired office network 46 (as is the message server 14).

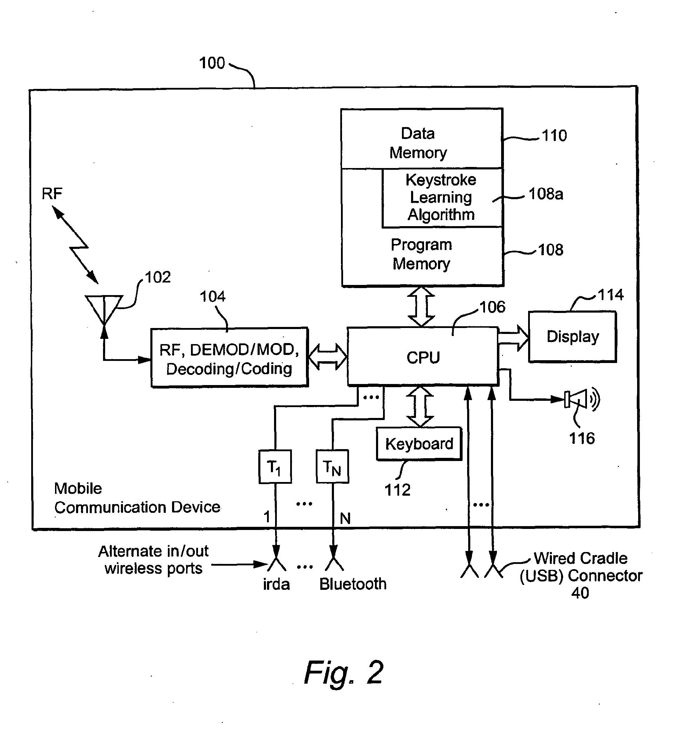

As depicted in FIG. 2, mobile communication device 100 includes a suitable RF antenna 102 for wireless communication to/from wireless network 20. Conventional RF, demodulation/modulation and decoding/coding circuits 104 are provided. As those in the art will appreciate, such circuits can involve possibly many digital signal processors (DSPs), microprocessors, filters, analog and digital circuits and the like. However, since such circuitry is well known in the art, it is not further described.

The mobile communication device 100 will also typically include a main control CPU 106 which operates under control of a stored program in program memory 108 (and which has access to data memory 110). CPU 106 also communicates with an input device, such as, for example, a touch screen, a screen using a stylus input, a conventional keyboard, a traditional phone keypad that includes shared keys for both alphabetic and numeric characters, a QWERTY-based layout keypad, keypads having combined phone and QWERTY layouts, or the like, 112, display 114 (e.g., an LCD) and audio transducer or speaker 116. A portion of program memory 108a is available for storing a keystroke or input string learning algorithm such as that described above, for example (which may also interface with and use an IT Policy resident in data memory 110). Suitable computer program executable code may also be stored in portions of program memory 108a to constitute the security algorithm for disabling the learning algorithm as described below in an exemplary operational illustration according to an exemplary implementation.

As also depicted in FIG. 2, the CPU 106 can be connected to a wired cradle USB connector 40 (which is, in effect, a USB port)and/or to any one or all of additional alternate input/output wireless ports (e.g., IrDA, BLUETOOTH®, etc.). As will be appreciated, such wireless ports will be associated with suitable transducer T₁ through T_{N}.

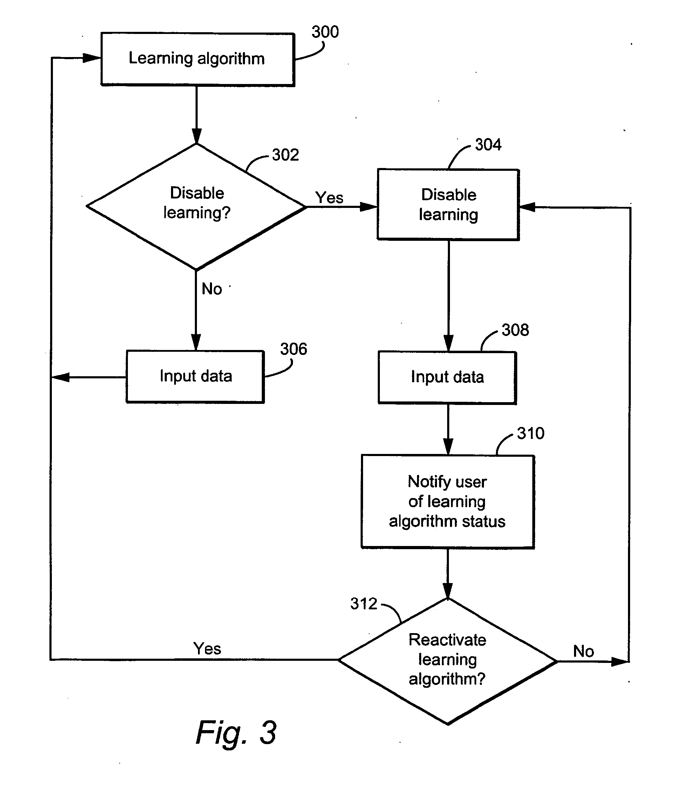

FIG. 3 is an illustrative flow diagram illustrating an operational example of user selective disabling of user input string learning according to an exemplary embodiment. According to one exemplary aspect as an operational example, a user is allowed to specify when the information being entered is considered to be secure or sensitive, and that the learning algorithm should not be invoked until such time as the entry of secure information has been completed. According to an alternative exemplary aspect, in addition to a user affirmatively disabling the learning algorithm, a program or application, by virtue of what is being entered, may also result in disabling the learning capability automatically in a manner transparent to the user. For example, many applications resident on the wireless communications device may be protected by usernames, passwords, or the like. Because the application knows when sensitive information is being entered, such as, for example, usernames, passwords, or the like (e.g., the device prompts for entry of a password or username, etc.), the application may disable the learning algorithm for entry of the desired input and then automatically re-activate the learning algorithm. Additionally, any number of other actions by the user may invoke automatic disabling of the learning algorithm, such as, for example, selecting a security option (e.g., encryption) during composition of a message, or entering data indicating secure information is being input into a particular field during composition of a message or entry of related items, e.g., tasks, calendar entries, or the like.

When the user elects to input secure information such that the user desires that the learning algorithm be disabled, the learning algorithm 300 detects the entry of a command from the user, or otherwise detects the input of sensitive or secure information that might invoke automatic disabling of the learning algorithm, 302 to disable the learning algorithm 304. If the secure input option is not selected by the user or automatically detected by the device 302, conventional entry of the input data, including operation of the learning algorithm is allowed to proceed 306. In the situation where secure entry of input data is selected or automatically detected, the secure entry proceeds without the learning algorithm being enabled 308. Upon completion of the input without learning 308, the user may be notified that the learning algorithm has been re-activated or remains disabled 310 so that the user is aware of the status of the learning algorithm, such as, for example, by audible tone, vibration, an icon indicating on/off status of the learning algorithm, or the like. Re-activation of the learning algorithm 312 may be automatically invoked based on any number of criteria, such as, for example, upon completion of a single input string (e.g., for a password), detection of an operation of an application other than data entry being performed that may indicate completion of an date entry (e.g., "sending" a message, completing a calendar or memo entry, etc.), initiation of a different application (e.g., switching from e-mail to calendar tasks, etc.), turning off/on the device, etc. On the other hand, a user may be required to affirmatively re-activate the learning algorithm after it has been disabled. Alternatively, the user may use menu options to disable the learning algorithm for predetermined periods based on any number of factors selectable by the system designer.

In addition to a user affirmatively disable the learning algorithm, a program or application, by virtue of what is being entered, may also automatically disable learning capability. For example, many applications resident on the wireless communications device may be protected by usernames, passwords, or the like. Because the application knows when sensitive information is being entered, such as, for example, usernames, passwords, or the like (e.g., the device prompt for entry of a password or username, etc.), the application may disable the learning algorithm for entry of the desired input and then automatically re-activate the learning algorithm. Additionally, for example, software on the device may detect the entry of secure information in a message or e-mail. For example, when composing a message, a user may select a secure option, such as, for example, to encrypt the message, which indicates to the device that a secure message is being composed, and automatic disabling of the learning algorithm is to be invoked. Alternatively, the device may recognize that the user is replying to or forwarding a secure message, and may use this as a basis for automatic disabling of the learning algorithm. It will be understood that any number of actions by the user may be used by the device to trigger automatic disabling of the learning algorithm, and that these actions depend upon system design, capability and IT policy.

While the technology discussed herein has been described in connection with exemplary implementations, those skilled in the art will recognize that various changes and modifications may be made to the exemplary implementations while retaining the novel features and advantages. Accordingly, all such variations and modifications are intended to fall within the scope of the invention as defined by the appended claims.

## Claims

1. A communication device (100) comprising:
an input mechanism configured to receive alphanumeric data that is at least partially ambiguous, on said communication device;
disambiguation program logic, coupled with said processor and resident on said communication device, operable to apply disambiguation protocols to said data received from the input mechanism based on entries in a memory by associating commonly used language, data and alphanumeric strings with said data received from the input mechanism;
an updating function operable to update said entries in said memory based on a usage frequency of said data received from the input mechanism; and the device being **characterised in that** it further comprises
disabling program logic coupled with the processor operable to disable (304) said updating function temporarily, based on an indication that said data received from the input mechanism comprises secure information, whilst maintaining said disambiguation program logic operable to apply disambiguation protocols to said data received from the input mechanism, so that said data received from the input mechanism is not used to update said memory.

2. The communication device (100) according to claim 1, wherein said disambiguation program logic is operable to provide predictive text for said data received from the input mechanism.

3. The communication device (100) according to claim 1, wherein said input mechanism comprises at least one of a stylus, a touch screen and a keypad.

4. The communication device (100) according to claim 3, wherein said keypad comprises at least one of a traditional phone keypad including shared keys for both alphabetic and numeric characters, a QWERTY-based keypad, and a keypad having combined phone and QWERTY layouts.

5. The communication device (100) according to claim 1, wherein said data received from said input mechanism comprises at least one of a password, e-mail text, a memo, a task, and a calendar entry.

6. The communication device (100) according to claim 1, further comprising reactivating program logic coupled with the processor operable to reactivate the updating function.

7. The communication device (100) according to claim 6, wherein said reactivating program logic is operable to perform at least one of detection of completion of an input string and an operation of an application indicating completion of data entry for a particular application.

8. The communication device (100) according to claim 1, wherein said disabling program logic is automatically initiated upon entry of information designated by an application to be secure information.

9. The communication device (100) according to claim 8, further comprising reactivating program logic coupled with the processor operable to reactivate the updating function, said reactivation operation being automatically executed when entry of said secure information is completed.

10. The communication device (100) according to claim 9, wherein said secure information comprises at least one of a user name and a password.

11. The communication device (100) according to claim 8, wherein automatic initiation of said disabling program logic is based on detection of at least one of: entering a secure message, replying to a secure message, forwarding a secure message, selecting a security option when composing a message, and addressing a message to a secure recipient.

12. The communication device (100) according to claim 1, wherein said communication device comprises a mobile wireless communication device.

13. The communication device (100) according to claim 1, further operable to provide a notification that said updating function is disabled, said notification including at least one of an audible notification, a visual notification, and a tactile notification.

14. The communication device (100) according to claim 13, wherein said visual notification comprises an icon displayed on said communication device indicating an on/off status of said updating operation.

15. A method of operating a communication device (100) that includes a memory containing entries used to provide likely outcomes of data entries, an updating function for updating said memory with data that is received from an input mechanism and is at least partially ambiguous, said updating function being operable to update said entries in said memory based on a usage frequency of said data received from the input mechanism, and disambiguation program logic operable to apply disambiguation protocols to said data received from the input mechanism based on entries in said memory by associating commonly used language, data and alphanumeric strings with said data received from the input mechanism, the method comprising:
enabling said updating function;
receiving an indication that said data received from the input mechanism comprises secure information;
disabling (304) said updating function temporarily based on the indication that said data received from the input mechanism comprises secure information, whilst maintaining said disambiguation program logic operable to apply disambiguation protocols to said data received from the input mechanism, so that said data received from the input mechanism is not used to update said memory;
entering (308) the data; and
reactivating said updating function upon completion of entry of said data.

16. The method according to claim 15, wherein receiving an indication further comprises receiving the indication from an input mechanism.

17. The method according to claim 15, wherein receiving an indication further comprises:
detecting that information designated by an application is secure information; and
generating the indication.

18. The method according to claim 17, wherein said designated information comprises at least one of a user name and a password.

19. The communication device according to claim 17, wherein automatic disabling of said updating function is based on detection of at least one of: entering a secure message, replying to a secure message, forwarding a secure message, selecting a security option when composing a message, and addressing a message to a secure recipient.

20. The method according to claim 16, wherein said updating function is automatically reactivated when entry of said secure information is completed.

21. The method according to claim 15, wherein said reactivating is selectively initiated.

22. The method according to claim 15, wherein enabling the updating function is selectively initiated.

23. The method according to claim 15, wherein enabling the updating function is automatically initiated by default.

24. The method according to claim 15, wherein reactivating the updating function occurs upon detection of completion of entry of said data received from the input mechanism.

25. The method according to claim 15, wherein reactivating the updating function automatically occurs upon detection of at least one of completion of an input string and an operation of an application indicating completion of data entry for a particular application.

26. The method according to claim 15, further comprising providing a notification when said updating function is disabled, said notification including at least one of an audible notification, a visual notification and a tactile notification.

27. The method according to claim 26, wherein said visual notification comprises displaying an icon on said communication device indicating an on/off status of said updating function.

## Patentansprüche

1. Kommunikationsvorrichtung (100), die aufweist:
einen Eingabemechanismus, der konfiguriert ist, alphanumerische Daten, die zumindest teilweise mehrdeutig sind, auf der Kommunikationsvorrichtung zu empfangen;
Disambiguierungsprogrammlogik, die mit dem Prozessor verbunden ist und sich auf der Kommunikationsvorrichtung befindet, die betriebsfähig ist, Disambiguierungsprotokolle auf die Daten anzuwenden, die von dem Eingabemechanismus empfangen werden, basierend auf Einträgen in einem Speicher, durch Zuordnen allgemein verwendeter Sprache, Daten und alphanumerischer Strings zu den Daten, die von dem Eingabemechanismus empfangen werden;
eine Aktualisierungsfunktion, die betriebsfähig ist, die Einträge in dem Speicher zu aktualisieren basierend auf einer Verwendungshäufigkeit der Daten, die von dem Eingabemechanismus empfangen werden; und
wobei die Vorrichtung **dadurch gekennzeichnet ist, dass** sie weiter aufweist Deaktivierungsprogrammlogik, die mit dem Prozessor verbunden ist, die betriebsfähig ist, die Aktualisierungsfunktion temporär zu deaktivieren (304), basierend auf einer Anzeige, dass die Daten, die von dem Eingabemechanismus empfangen werden, sichere Information aufweisen, während die Disambiguierungsprogrammlogik betriebsfähig gehalten wird, um Disambiguierungsprotokolle auf die Daten anzuwenden, die von dem Eingabemechanismus empfangen werden, so dass die Daten, die von dem Eingabemechanismus empfangen werden, nicht verwendet werden, um den Speicher zu aktualisieren.

2. Kommunikationsvorrichtung (100) gemäß Anspruch 1, wobei die Disambiguierungsprogrammlogik betriebsfähig ist, prädiktiven Text für die Daten zu liefern, die von dem Eingabemechanismus empfangen werden.

3. Kommunikationsvorrichtung (100) gemäß Anspruch 1, wobei der Eingabemechanismus zumindest eines aus einem Stift, einem Berührungsbildschirm und einer Tastatur aufweist.

4. Kommunikationsvorrichtung (100) gemäß Anspruch 3, wobei die Tastatur zumindest eines aus einer herkömmlichen Telefontastatur, mit gemeinsamen Tasten für sowohl alphabetische als auch numerische Zeichen, einer QWERTY-basierten Tastatur und einer Tastatur mit kombinierter Telefon- und QWERTY-Anordnung aufweist.

5. Kommunikationsvorrichtung (100) gemäß Anspruch 1, wobei die Daten, die von dem Eingabemechanismus empfangen werden, zumindest eines aufweisen aus einem Passwort, einem Email-Text, einem Memo, einer Aufgabe und einem Kalendereintrag.

6. Kommunikationsvorrichtung (100) gemäß Anspruch 1, die weiter aufweist eine Reaktivierungsprogrammlogik, die mit dem Prozessor verbunden ist, die betriebsfähig ist, die Aktualisierungsfunktion zu reaktivieren.

7. Kommunikationsvorrichtung (100) gemäß Anspruch 6, wobei die Reaktivierungsprogrammlogik betriebsfähig ist, zumindest eines durchzuführen aus einem Erfassen eines Abschlusses eines Eingabe-Strings und einer Operation einer Anwendung, die einen Abschluss einer Dateneingabe für eine bestimmte Anwendung anzeigt.

8. Kommunikationsvorrichtung (100) gemäß Anspruch 1, wobei die Deaktivierungsprogrammlogik automatisch bei Eingabe von Information initiiert wird, die durch eine Anwendung als eine sichere Information bestimmt wird.

9. Kommunikationsvorrichtung (100) gemäß Anspruch 8, die weiter aufweist eine Reaktivierungsprogrammlogik, die mit dem Prozessor verbunden ist, die betriebsfähig ist, die Aktualisierungsfunktion zu reaktivieren, wobei die Reaktivierungsoperation automatisch ausgeführt wird, wenn eine Eingabe der sicheren Information abgeschlossen ist.

10. Kommunikationsvorrichtung (100) gemäß Anspruch 9, wobei die sichere Information zumindest eines aus einem Benutzernamen und einem Passwort aufweist.

11. Kommunikationsvorrichtung (100) gemäß Anspruch 8, wobei eine automatische Initiierung der Deaktivierungsprogrammlogik basiert auf einem Erfassen von zumindest einem aus: Eingeben einer sicheren Nachricht, Antworten auf eine sichere Nachricht, Weiterleiten einer sicheren Nachricht, Auswählen einer Sicherheitsoption bei der Erstellung einer Nachricht, und Adressieren einer Nachricht an einen sicheren Empfänger.

12. Kommunikationsvorrichtung (100) gemäß Anspruch 1, wobei die Kommunikationsvorrichtung eine mobile drahtlose Kommunikationsvorrichtung aufweist.

13. Kommunikationsvorrichtung (100) gemäß Anspruch 1, die weiter betriebsfähig ist, eine Benachrichtigung vorzusehen, dass die Aktualisierungsfunktion deaktiviert ist, wobei die Benachrichtigung zumindest eines umfasst aus einer hörbaren Benachrichtigung, einer visuellen Benachrichtigung und einer fühlbaren Benachrichtigung.

14. Kommunikationsvorrichtung (100) gemäß Anspruch 13, wobei die visuelle Benachrichtigung ein Symbol aufweist, das auf der Kommunikationsvorrichtung angezeigt wird, das einen an/aus-Status der Aktualisierungsoperation anzeigt.

15. Verfahren eines Betreibens einer Kommunikationsvorrichtung (100), die einen Speicher umfasst, der Einträge enthält, die verwendet werden, um wahrscheinliche Ergebnisse von Dateneingaben vorzusehen, eine Aktualisierungsfunktion zum Aktualisieren des Speichers mit Daten, die von einem Eingabemechanismus empfangen werden und zumindest teilweise mehrdeutig sind, wobei die Aktualisierungsfunktion betriebsfähig ist, die Einträge in dem Speicher zu aktualisieren basierend auf einer Verwendungshäufigkeit der Daten, die von dem Eingabemechanismus empfangen werden, und eine Disambiguierungsprogrammlogik, die betriebsfähig ist, Disambiguierungsprotokolle auf die Daten anzuwenden, die von dem Eingabemechanismus empfangen werden, basierend auf Einträgen in dem Speicher, durch Zuordnen allgemein verwendeter Sprache, Daten und alphanumerischer Strings zu den Daten, die von dem Eingabemechanismus empfangen werden, wobei das Verfahren aufweist:
Aktivieren der Aktualisierungsfunktion;
Empfangen einer Anzeige, dass die Daten, die von dem Eingabemechanismus empfangen werden, sichere Information aufweisen;
temporäres Deaktivieren (304) der Aktualisierungsfunktion basierend auf der Anzeige, dass die Daten, die von dem Eingabemechanismus empfangen werden, sichere Information aufweisen, während die Disambiguierungsprogrammlogik betriebsfähig gehalten wird, um Disambiguierungsprotokolle auf die Daten anzuwenden, die von dem Eingabemechanismus empfangen werden, so dass die Daten, die von dem Eingabemechanismus empfangen werden, nicht verwendet werden, um den Speicher zu aktualisieren;
Eingeben (308) der Daten; und
Reaktivieren der Aktualisierungsfunktion bei Abschluss der Eingabe der Daten.

16. Verfahren gemäß Anspruch 15, wobei das Empfangen einer Anzeige weiter ein Empfangen der Anzeige von einem Eingabemechanismus aufweist.

17. Verfahren gemäß Anspruch 15, wobei das Empfangen einer Anzeige weiter aufweist:
Erfassen, dass Information, die durch eine Anwendung bestimmt wird, eine sichere Information ist; und
Erzeugen der Anzeige.

18. Verfahren gemäß Anspruch 17, wobei die bestimmte Information zumindest eines aus einem Benutzernamen und einem Passwort aufweist.

19. Kommunikationsvorrichtung gemäß Anspruch 17, wobei ein automatisches Deaktivieren der Aktualisierungsfunktion basiert auf einem Erfassen von zumindest einem aus: Eingeben einer sicheren Nachricht, Antworten auf eine sichere Nachricht, Weiterleiten einer sicheren Nachricht, Auswählen einer Sicherheitsoption bei der Erstellung einer Nachricht, und Adressieren einer Nachricht an einen sicheren Empfänger.

20. Verfahren gemäß Anspruch 16, wobei die Aktualisierungsfunktion automatisch reaktiviert wird, wenn eine Eingabe der sicheren Information abgeschlossen ist.

21. Verfahren gemäß Anspruch 15, wobei das Reaktivieren selektiv initiiert wird.

22. Verfahren gemäß Anspruch 15, wobei ein Aktivieren der Aktualisierungsfunktion selektiv initiiert wird.

23. Verfahren gemäß Anspruch 15, wobei ein Aktivieren der Aktualisierungsfunktion standardmäßig automatisch initiiert wird.

24. Verfahren gemäß Anspruch 15, wobei das Reaktivieren der Aktualisierungsfunktion bei Erfassung eines Abschlusses einer Eingabe der Daten stattfindet, die von dem Eingabemechanismus empfangen werden.

25. Verfahren gemäß Anspruch 15, wobei das Reaktivieren der Aktualisierungsfunktion automatisch stattfindet bei Erfassen von zumindest einem aus einem Abschluss eines Eingabe-Strings und einer Operation einer Anwendung, die einen Abschluss einer Dateneingabe für eine bestimmte Anwendung anzeigt.

26. Verfahren gemäß Anspruch 15, das weiter aufweist Vorsehen einer Benachrichtigung, wenn die Aktualisierungsfunktion deaktiviert ist, wobei die Benachrichtigung zumindest eines umfasst aus einer hörbaren Benachrichtigung, einer visuellen Benachrichtigung und einer fühlbaren Benachrichtigung.

27. Verfahren gemäß Anspruch 26, wobei die visuelle Benachrichtigung ein Anzeigen eines Symbols auf der Kommunikationsvorrichtung aufweist, das einen an/aus-Status der Aktualisierungsfunktion anzeigt.

## Revendications

1. Dispositif de communication (100) comprenant :
un mécanisme d'entrée configuré pour recevoir sur ledit dispositif de communication des données alphanumériques qui sont au moins partiellement ambiguës ;
une logique de programme de désambiguïsation, couplée audit processeur et résidant sur ledit dispositif de communication, en mesure d'appliquer des protocoles de désambiguïsation auxdites données reçues du mécanisme d'entrée, sur la base de rubriques stockées dans une mémoire, en associant une langue, des données et des chaînes alphanumériques utilisées fréquemment auxdites données reçues du mécanisme d'entrée ;
une fonction de mise à jour en mesure de mettre à jour lesdites rubriques dans ladite mémoire sur la base d'une fréquence d'utilisation desdites données reçues du mécanisme d'entrée ;
ledit dispositif étant **caractérisé en ce qu'**il comprend en outre :
une logique de programme d'inhibition, couplée au processeur et en mesure d'inhiber (304) ladite fonction de mise à jour temporairement, sur la base d'une indication selon laquelle lesdites données reçues du mécanisme d'entrée comprennent des informations sécurisées, tout en maintenant ladite logique de programme de désambiguïsation en état d'appliquer des protocoles de désambiguïsation auxdites données reçues du mécanisme d'entrée, si bien que lesdites données reçues du mécanisme d'entrée ne sont pas utilisées pour mettre à jour ladite mémoire.

2. Dispositif de communication (100) selon la revendication 1, dans lequel ladite logique de programme de désambiguïsation est en mesure de fournir un texte prédictif pour lesdites données reçues du mécanisme d'entrée.

3. Dispositif de communication (100) selon la revendication 1, dans lequel ledit mécanisme d'entrée comprend au moins un dispositif parmi un stylet, un écran tactile et un clavier.

4. Dispositif de communication (100) selon la revendication 3, dans lequel ledit clavier comprend au moins un clavier de type clavier téléphonique traditionnel comprenant des touches partagées pour les caractères alphabétiques et numériques, un clavier de type QWERTY et un clavier ayant une maquette combinée de type téléphonique et QWERTY.

5. Dispositif de communication (100) selon la revendication 1, dans lequel lesdites données reçues dudit mécanisme d'entrée comprennent au moins l'un des éléments suivants : mot de passe, texte de courriel, mémo, tâche à effectuer et rubrique d'agenda.

6. Dispositif de communication (100) selon la revendication 1, comprenant en outre une logique de programme de réactivation couplée au processeur, en mesure de réactiver la fonction de mise à jour.

7. Dispositif de communication (100) selon la revendication 6, dans lequel ladite logique de programme de réactivation est en mesure d'exécuter au moins une des actions de détection suivantes : détection de l'achèvement d'une chaîne d'entrée et détection d'une mise en oeuvre d'une application qui indique l'achèvement de la saisie de données pour une application particulière.

8. Dispositif de communication (100) selon la revendication 1, dans lequel ladite logique de programme d'inhibition est automatiquement lancée lors de la saisie d'informations qui sont conçues comme des informations sécurisées par une application.

9. Dispositif de communication (100) selon la revendication 8, comprenant en outre une logique de programme de réactivation couplée au processeur et en mesure de réactiver la fonction de mise à jour, ladite opération de réactivation étant exécutée automatiquement lorsque la saisie desdites informations sécurisées est achevée.

10. Dispositif de communication (100) selon la revendication 9, dans lequel lesdites informations sécurisées comprennent au moins l'un des éléments suivants : nom d'utilisateur et mot de passe.

11. Dispositif de communication (100) selon la revendication 8, dans lequel le lancement automatique de ladite logique de programme d'inhibition est fondé sur la détection d'au moins un des éléments suivants : saisie d'un message sécurisé, réponse à un message sécurisé, transfert d'un message sécurisé, sélection d'une option de sécurité lors de la composition d'un message et envoi d'un message à un destinataire sécurisé.

12. Dispositif de communication (100) selon la revendication 1, dans lequel ledit dispositif de communication est constitué d'un dispositif de communication mobile sans fil.

13. Dispositif de communication (100) selon la revendication 1, en outre en mesure de fournir un message signalant l'inhibition de ladite fonction de mise à jour, ledit message comprenant au moins l'un des modes suivants :
message audible, message visuel ou message tactile.

14. Dispositif de communication (100) selon la revendication 13, dans lequel ledit message visuel comprend une icône affichée sur ledit dispositif de communication, indiquant un état de marche/arrêt de ladite fonction de mise à jour.

15. Procédé de fonctionnement d'un dispositif de communication (100) comprenant une mémoire contenant des rubriques utilisées pour fournir des résultats probables de rubriques de données, une fonction de mise à jour destinée à mettre à jour ladite mémoire à l'aide de données qui sont reçues d'un mécanisme d'entrée et qui sont au moins partiellement ambiguës, ladite fonction de mise à jour étant en mesure de mettre à jour lesdites rubriques dans ladite mémoire sur la base d'une fréquence d'utilisation desdites données reçues du mécanisme d'entrée, et une logique de programme de désambiguïsation en mesure d'appliquer des protocoles de désambiguïsation auxdites données reçues du mécanisme d'entrée sur la base de rubriques dans ladite mémoire, en associant une langue, des données et des chaînes alphanumériques utilisées fréquemment auxdites données reçues du mécanisme d'entrée, le procédé comprenant les étapes consistant à :
valider ladite fonction de mise à jour ;
recevoir une indication selon laquelle lesdites données reçues du mécanisme d'entrée comprennent des informations sécurisées ;
inhiber (304) ladite fonction de mise à jour temporairement, sur la base de l'indication selon laquelle lesdites données reçues du mécanisme d'entrée comprennent des informations sécurisées, tout en maintenant ladite logique de programme de désambiguïsation en état d'appliquer des protocoles de désambiguïsation auxdites données reçues du mécanisme d'entrée, si bien que lesdites données reçues du mécanisme d'entrée ne sont pas utilisées pour mettre à jour ladite mémoire ;
saisir (308) les données ; et
réactiver ladite fonction de mise à jour après achèvement de la saisie desdites données.

16. Procédé selon la revendication 15, dans lequel l'étape de réception d'une indication comprend la réception d'une indication provenant d'un mécanisme d'entrée.

17. Procédé selon la revendication 15, dans lequel l'étape de réception d'une indication comprend en outre les étapes consistant à :
détecter que des informations désignées par une application sont des informations sécurisées ; et
produire l'indication.

18. Procédé selon la revendication 17, dans lequel lesdites informations désignées comprennent au moins un des éléments suivants : nom d'utilisateur et mot de passe.

19. Dispositif de communication selon la revendication 17, dans lequel l'inhibition automatique de ladite fonction de mise à jour est fondée sur la détection d'au moins une des actions suivantes : saisie d'un message sécurisé, réponse à un message sécurisé, transfert d'un message sécurisé, sélection d'une option de sécurité lors de la composition d'un message et envoi d'un message à un destinataire sécurisé.

20. Procédé selon la revendication 16, dans lequel ladite fonction de mise à jour est automatiquement réactivée lorsque la saisie desdites informations sécurisées est achevée.

21. Procédé selon la revendication 15, dans lequel ladite réactivation est commandée sélectivement.

22. Procédé selon la revendication 15, dans lequel la validation de la fonction de mise à jour est commandée sélectivement.

23. Procédé selon la revendication 15, dans lequel la validation de la fonction de mise à jour est commandée automatiquement par défaut.

24. Procédé selon la revendication 15, dans lequel la réactivation de la fonction de mise à jour se produit après détection de l'achèvement de la saisie desdites données reçues du mécanisme d'entrée.

25. Procédé selon la revendication 15, dans lequel la réactivation de la fonction de mise à jour se produit automatiquement lors de la détection d'au moins l'un des événements suivants : achèvement d'une chaîne d'entrée et mise en oeuvre d'une application qui indique l'achèvement de la saisie de données pour une application particulière.

26. Procédé selon la revendication 15, comprenant en outre la fourniture d'un message lorsque ladite fonction de mise à jour est inhibée, ledit message comprenant au moins l'un des messages suivants : message audible, message visuel et message tactile.

27. Procédé selon la revendication 26, dans lequel ledit message visuel comprend l'étape consistant à afficher une icône sur ledit dispositif de communication, indiquant un état de marche/arrêt de ladite fonction de mise à jour.
